# EUROPEAN PATENT APPLICATION

(11) **EP 4 418 121 A1**
(43) Date of publication of application: **21.08.2024**
(21) Application number: 23157644.8
(22) Date of filing: 20.02.2023
(51) Int. Cl.: G06F 9/54, G06F 16/27

(54) **METHOD AND SYSTEM FOR PUBLISHING EVENTS ON A DATA STREAM**

(71) Applicant: Barclays Execution Services Limited, London E14 5HP (GB)
(72) Inventor: MAHESHWARI, Nikhil, 411057 Pune (IN); KHATIK, Arvind, 312201 District Chittorgarh (IN); PILLAI, Harikrishnan Ravi, 411035 Pune (IN); JAIN, Siddharth, 332001 Sikar (IN)
(74) Representative: Carpmaels & Ransford LLP

(57) **Abstract**

The invention provides computer-implemented methods for publishing an event to at least one stream and data processing apparatuses, computer programs, and computer readable storage media for achieving the same. Publishing an event to at least one stream comprises receiving an operation to be performed on a domain table, performing the operation on the domain table, populating an event log table with event data, and publishing an event to a target stream.

## Description

### Technical Field

This invention provides computer-implemented methods and system for managing and publishing an event to at least one data stream, along with data processing apparatuses, computer programs, and computer readable storage media for achieving the same.

### Background

Modern computer-implemented systems often comprise a number of domains, each performing a specific function within the system. Each domain can be configured to receive a specific set of inputs, process them, and produce a specific set of outputs. This is particularly common in a cloud-based computing environment where domains can be generated and accessed in a distributed fashion utilising multiple computing resources or services.

When processing a given action, the system can then call on each domain simultaneously and/or in an effective order, passing information between the domains as necessary. This is advantageous in preference to having a single domain capable of performing the entire action, because each domain can be optimised for its specific purpose and reduces the complexity and storage requirements of the system.

In other words, it is advantageous that the domains are modular, each having a specific role. With such an implementation, the system can be more efficient and flexible: taking a first action requiring functions A, B, C, and D can be implemented by initiating equivalent domains A, B, C, and D, rather than requiring an end-to-end function ABCD to be written and stored.

One possible drawback to such an implementation, however, is that the domains must communicate with one another in order to update one another on the progress of the action as a whole, and of that domain's individual progress with its functionality. Issues can arise when this communication is not performed accurately or fully, because the domains become inconsistent with one another.

For example, consider a system which handles authentication and retrieval of sensitive data. The system may include an authentication domain and a user change domain. Both domains store a copy of a database of authenticated users and their associated passwords. The function of the authentication domain is to receive a user's name and password and determine whether or not they are authorised by performing a look-up in its stored database. The function of the user change domain is to receive requests to add to or remove from the database authenticated users.

If, continuing this example, the system receives a request to remove an authenticated user from the database, this request will be passed to the user change domain. The user change domain might perform this action correctly for its own copy of the database of authenticated users, removing the previously authenticated user. Now, however, it must communicate this change to the authentication domain.

Suppose that communication of the removal of an authenticated user fails to reach the authentication domain, such that the authentication domain's local database retains the no longer authenticated user. This might occur to a communication error or downtime issue with either or both of the domains. If the system now receives a request to authenticate that same user, this request will be passed to the authentication domain. Despite the user change domain having correctly performed its function, and perhaps even having reported successful removal to other domains in the system, its failure accurately to communicate the change to the authentication domain is such that the authentication domain will now authenticate the user based on outdated authentication information. This situation can be particularly problematic in a cloud-based computing environment.

Thus, the result of the inconsistency between the two domains could lead to an unauthorised user gaining access to sensitive information.

Communication between domains can be performed using events published to data streams. The event describes the function undertaken by the publishing domain and the stream can be `listened to' by other domains. In other words, other domains can automatically pick up and action events published to certain streams.

While there are certain advantages to using event- and stream-based implementations for communication between domains (in particular in a cloud-based computing environment), such systems still suffer from the drawbacks detailed above. Namely, if publication of the event fails, the domains become inconsistent generating synchronisation problems.

Inconsistency can also arise for such implementations when multiple events are published one after the other, and one or more of the events fails to publish. This is particularly problematic in cases where the data stored locally in each domain is interdependent or cumulative, and can be further exacerbated in a cloud-based computing environment

For example, if the user change domain from the previous example generated an event to update the address of a user based on the user's name and user ID, and this event failed to publish, the user's address would remain unchanged in the authentication domain. If, subsequently, the user change domain generates an event intended to update the user IDs of all users registered at the address, the authentication domain will erroneously ignore the user for whom the address should have been updated, and will not update their user ID.

This is a particularly dangerous occurrence, because, if queried or investigated, both domains would report accurate processing of the user ID change event, despite in reality having actioned it differently due to a prior inconsistency. As the number of events being processed increases, compounding inconsistencies can build up rapidly, exacerbating synchronisation issues.

In view of the above, there is a need for an improved method for publishing an event to a target stream so as to reduce or avoid data synchronisation issues.

### Summary

In a first aspect of the invention, there is provided a method for publishing an event to at least one data stream, the method comprising: receiving an operation to be performed on a domain table; performing the operation on the domain table; populating an event log table with event data, the event data being based on the operation performed on the domain table; publishing, in response to the populating of the event log table, an event to a target stream, the event being based on the event data.

As a result of the present invention, the domain retains an accurate log of events that it has published: the event log table. The event log table may be stored locally to the domain, and may be interrogatable either by the domain internally or by an external domain/system. This is advantageous because the events published by the domain are now traceable and, if necessary, repeatable in the manner and chronological order in which they were intended to be published.

The root cause of an inconsistency between domains is thus more effectively identifiable, and the series of steps which must be taken to 'undo' that inconsistency is also more readily identifiable. Reducing inconsistency between domains leads to a more effective and efficient system, and reduces the likelihood of entire-system crashes, data breaches, computationally-expensive processing loops, and many other outcomes which are significantly detrimental for a technical system.

The operation to be performed may be an operation performed by a computing server or cloud-based computing device and the target stream may be published by the computing server or cloud-based computing device. The event log table may be maintained within or external to the computing server or cloud-based computing device.

In the context of the present invention, an operation may be defined as a change that must be implemented to a locally stored domain table. For example, inserting, deleting, or altering a data entry in a domain table might be an operation typically performed on a domain table.

The event data may be indicative of the operation performed on the event table. More particularly, the event data may comprise data characterising or unique to the operation performed on the event table. The event published to the target stream is an event which is characterised by the event data, and thus the operation performed on the event table.

In the context of the present invention, an event may be defined as a data packet describing an operation performed on a domain table. In other words, an event comprises, in a format which can be published to a stream, the information necessary for a domain table to be the subject of a specific operation. Thus, in embodiments in which domain tables listening to the target stream are capable of processing a 'raw' operation, the published event will be equivalent to an operation. In other embodiments, the event will comprise additional data.

In the context of the present invention, a stream may be defined as a communications channel for transmitting events between domains. Any given domain may be a publisher, listener, or both, with respect to a stream. A publisher is a domain which provides events to other domains via a stream, and a listener is a domain which receives and processes any event published to the stream. One example of a stream-based implementation that could be employed by the present invention is Kinesis Data Streams, but any stream as defined above is suitable for implementing methods of the invention.

Performing the operation on the domain table and populating the event log table with the event data may occur simultaneously, optionally the two steps may occur with atomicity.

By performing the operation on the domain table simultaneously with the population of the event table, the event table can be kept in conformity with the domain table to a greater extent than if the operation and population are performed sequentially. This is particularly advantageous for domains processing a high volume of events in short time periods.

In the context of the present invention, atomicity refers to a property of two steps of a method being controlled such that one cannot occur without the other occurring. Thus, there are only two possible outcomes when performing two steps with atomicity: both steps successfully occur or neither step successfully occurs.

By performing the operation on the domain table and the population of the event log table with atomicity, the present invention ensures that the event log table is not erroneously populated with an event based on an operation which actually has not yet been performed on the domain table. Atomicity of these steps also ensures that any operation which is successfully performed on the domain table must be reflected in the event log table. One example of a suitable function for ensuring atomicity is TransactionWriteltems, but any function that ensures atomicity can be used.

The populating of an event in the event log table may automatically trigger a publication attempt to the target stream, once identified. In some embodiments, the event log table is monitored for any changes and an insert to the event log table triggers publication. For example, Change Data Capture (CDC) may be enabled on the event log table, such that populating the event log table with a new event automatically triggers the event to be sent for publication.

The event data may comprise a status identifier, and, at the point of populating the event log table, the status identifier identifies that the event is pending publication. In this way, the method retains yet further information in the event log table, allowing for the status of publication of the event to be tracked. Identifying and diagnosing inconsistencies between domains is made easier, as are other functions that can be performed by the domain.

The method may further comprise receiving confirmation that the event has been published to the at least one stream. The method may further comprise: updating the status identifier in the event log table to identify that the event has completed publication. In this way, the event log table can be interrogated, either by a user or automatically by a publication retry as will be discussed in greater detail herein, and it can be determined whether or not a recorded event has published.

This can be beneficial when attempting to diagnose the cause of data inconsistencies, for example, a successful publication from a first domain but which nevertheless has an inconsistency with a second domain might highlight a domain table operation stream listening issue at the second domain. This is, therefore, also helpful for identifying that a third domain also listening to the stream may be consistent with the first domain, given that the issue appears to be downstream of the first domain.

The event data may further comprise a target stream identifier, and publishing the event to the target stream may comprise: determining, based on the target stream identifier, the target stream to which to publish the event. In this way, the invention can efficiently publish the event to the correct stream.

The target stream identifier may comprise an event type identifier, and determining the target stream to which to publish the event may comprise: determining an event type of the event from the event type identifier; and determining a target stream associated with the event type, optionally retrieving the target stream from a lookup table.

In some cases, the streams to which the event should be published will be determined by the type of event. One particularly efficient way to determine the appropriate stream for such an event is to store a lookup table correlating event types and target streams, which can be interrogated when publication is performed. There need not be a strict one-to-one ratio between events and target streams: one type of event may require publication to multiple streams; and a given stream may receive events of different types.

If the event data comprises no event type identifier or if no target stream can be determined to be associated with the event type, the method may be aborted. In this way, the method is not inefficiently looping through the target stream lookup process by repeatedly determining that the event currently has no target stream, performing a lookup, and retrieving no target stream.

The event data may further comprise at least one of: a timestamp corresponding to when the event was logged; a timestamp corresponding to when the event was published; an originator identifier, identifying the source of the event; a payload identifier, identifying the event payload; a version identifier, identifying the event version; and a retry identifier, identifying a number of attempts to publish the event; and a publication identifier, identifying whether or not the event has been published to the target stream.

Each of these additional components of event data improves the ability of the user or of the system automatically to identify problematic events and/or domains, and to improve system stability yet further by identifying and/or preventing data inconsistencies.

The event may be published to at least two target streams, and the status identifier in the event log table may be updated to identify that the event has completed publication when confirmation of publication to all streams is received. In this way, consistency between all domains is ensured, even for events or event types which require publication to multiple streams.

The method may further comprise: identifying that publishing the event to the target stream has failed; and retrying the publishing step at least once, optionally three times, wherein retrying steps are halted if the event successfully publishes.

Identifying that publishing the event to the target stream has failed may comprise receiving a return message from the stream suggesting failure to publish, or may comprise identifying that the event's publication identifier remains pending after a certain period of time in which it should be expected that publication would occur, or by any other means.

In this way, the method ensures that events in the event log table are eventually published, even if they fail to publish at the first attempt. As such, the method takes advantage of the event log table providing an accurate record of events which are known to have been committed to the domain table, i.e. operations which are known to have been performed on the domain table. If an event appears in the event log table, an equivalent operation must have been performed on the domain table (in embodiments where the two are atomic in nature). Thus, by ensuring both that operations performed on the domain table appear as events in the event log table and that events which appear in the event log table are published, it can be ensured that an operation performed on a local domain table always leads to an equivalent published event. Thus, the likelihood of data inconsistencies between domain tables is advantageously reduced.

A first retry of the publishing step may take place a first time interval after the failure to publish first occurred, and a second retry of the publishing step may take place a second time interval after failure of the first retry, wherein the second time interval is larger than the first time interval. By increasing the time intervals between retry attempts, the domain and/or stream are permitted gradually longer for the issue inhibiting publication to be rectified. In some embodiments, three exponentially increasing time intervals are used. In other embodiments, first, second, and third time intervals of 10ms, 25ms, and 40ms are used.

The domain table and event log table may be stored in a first domain, and the target stream may publish the event to a second domain, distinct from the first domain.

The database may be a SQL database or a NoSQL Database. Preferably, the database utilised implements Change Data Capture (CDC) functionality to capture updates to the database via the at least one data stream.

The method may further comprise: receiving a second operation to be performed on the domain table; repeating the steps of any one of claims 1 to 14 for the second operation.

The method may further comprise: determining that publishing the event based on one or both of the first and second operations failed to be performed successfully; and at a configurable interval, retrying each publishing that is determined to have failed.

In this way, after, for example, a bundle of events are sent for publishing in a short time period, the invention can configure the retry interval to be longer, so as not to overwhelm the processing capabilities of the domain, stream, or system as a whole.

In some embodiments, the events are retried strictly in the order in which they were populated in the event log table.

In a second aspect of the invention, there is provided a data processing apparatus comprising a processor configured to carry out the method of the first aspect.

In a third aspect of the invention, there is provided a computer program comprising instructions which, when executed on a computer, cause the computer to carry out the method of the first aspect.

A computer readable storage medium having stored thereon the computer program of the third aspect.

### Brief Description of the Drawings

Embodiments of the invention will be described, by way of example, with reference to the following figures, in which:
Fig. 1 is a block diagram of an event management system according to the present disclosure.
Fig. 2 is a flow diagram of a method for operating the event management system of Fig. 1.
Fig. 3 is a component diagram of one embodiment of the event management system of Fig. 1.
Fig. 4 is a sequence diagram of the method of Fig. 2 as implemented in the embodiment of Fig. 3.
Fig. 5 is a schematic of an exemplary system for implementing systems and methods of the present disclosure.
Fig. 6 is a schematic of an exemplary third-party cloud environment for implementing systems and methods of the present disclosure.
Fig. 7 is a schematic of an exemplary computer hardware for implementing a method of the present disclosure.

### Detailed Description

The invention is described below with reference to one exemplary embodiment and the aforementioned figures. The described embodiment is merely illustrative is not intended to limit the scope of the appended claims.

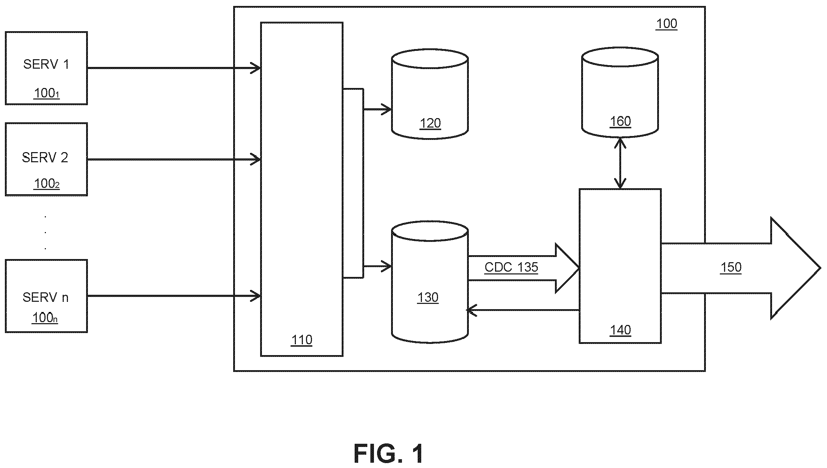

Fig. 1 is a block diagram of a computer-based event management system 100 according to the present disclosure. As shown in the diagram, the event management system 100 comprises a processing module 110, a domain table 120, an event log table 130, a message broker module 140, and a target data stream 150. Additionally, a configuration store 160 is provided which is configured to receive and store message routing information for the message broker module 140. The message routing information can contain data which maps event or operation type to a given stream name. This can then be used as a lookup to determine which target stream where each operation or message received by the domain table 120 needs to be published eventually.

The configuration store 160 is a standalone component decoupled from the ongoing routine processes of the transaction event management system. Mappings in the configuration store 160 can be updated explicitly without any direct impact to the underlying event management processing, other than for identification of the target streams during the event management processing as outlined below.

Also, as shown in Fig. 1, external to the event management system 100, there are multiple services wishing to post events on the target data stream 150, namely services 101₁ ...101ₙ. Each service may be hosted on a cloud environment such as Amazon Web Services (AWS). In some embodiments, the first and second cloud-based accounts may be different accounts on the cloud environment. Each service may be selected from a list including: Amazon Managed Streaming for AWS Managed Kafka, Amazon Kinesis, Rabbit MQ, Amazon Simple Notification Service, Amazon Simple Queue Service, and Apache RocketMQ. Moreover, the functionality and configuration of the event management system 100 may be extended to other services not listed herein by implementing additional build.

In one embodiment, the event management system 100 relies on Amazon Kinesis, DynamoDB and an SSM Parameter Store (configuration store 160). In particular, DynamoDB is configured according to the invention to enable a stream of events to track each occasion that a create, read, update or delete (CRUD) operation is performed on the domain table 120, such that the corresponding event is published to a configured Kinesis stream without risk of corruption or missed events.

It will be appreciated that in some embodiments the event management system 100 may comprise additional components that are not illustrated in Fig. 1.

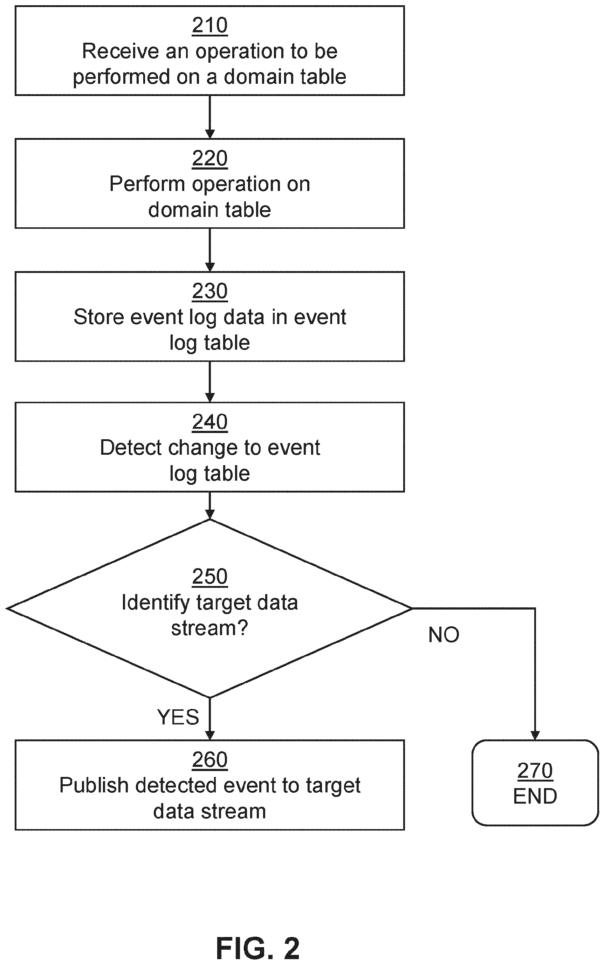

Fig. 2 is a flow diagram of a method implemented by the event management system 100 according to the present disclosure. For ease of illustration, the steps of the method 200 are described herein with reference to the various components of the event management system 100 as shown in Fig. 1.

The computer-implemented method 200 begins with step 210 at which an operation is received from services 101₁ ...101ₙ at processing module 110. At step 220, the processing module 110 performs the requested operation on the domain table 120 whilst event log data for the operation is generated by the processing module 110 and stored in event log table 130 at step 230. The event log table 130 is updated in one embodiment as follows:
i. pk (ACCOUNT#accountId)- Identifier, used to query the unique records from the event log table
ii. sk (EVENT#eventType#eventId)- Identifier, used to sort the records from the event log table
iii. gsi1pk (STATUS#PENDING) - Index Identifier used to query the records from the event log table based on event status
iv. gsilsk (DATETIME.NOW())- Index Identifier used to sort the records from the event log table based on timestamp given
v. accountId - Unique account id
vi. correlationId - Unique GUID
vii. eventLoggedDate - Date when event is logged
viii. eventOriginator - Source who has published the event
ix. customHeaders - Custom additional headers used in the event headers.
x. eventPayload - payload of the event
xi. eventType - type of the event
xii. eventVersion - Unique version of the event
xiii. eventid - Generic UUID, unique for all the events
xiv. eventStatus - status of the event
xv. eventPartitionKey - partition key of the event, used while producing into kinesis stream.

The message broker module 140 is in listening mode on the event log table 130 and captures any change made to the event log table 130 at step 240. When a change is detected by the message broker module 140, an attempt is made to identify in step 250 the corresponding target data stream 150 for the relevant event from the configuration store 160. If a corresponding target data stream 150 can be identified by the message broker module 140, then the received event is published to the identified target stream 150 (or identified target streams) at step 260, and once the event has been published to the relevant stream(s), the event log table 130 is updated. If no target data stream can be identified, then the event is not published to any target data stream and the process ends at step 270.

Any event that is successfully published to the target data stream 150 causes the message broker 140 to update the event log table 130 in step 280, in one example, as follows with the following fields updated (definitions below):
1. gsi1pk - Index Identifier used to query the records from the event log table based on event status which works with gsilsk
2. gsilsk - Index Identifier used to sort the records from the event log table based on timestamp given which works with gsi1pk
3. gsi2pk - Index Identifier used to query the records from the event log table based on event status which works with gsi2sk
4. gsi2sk - Index Identifier used to sort the records from the event log table based on timestamp given which works with gsi2pk
5. eventStatus - status of the event
6. retryCount - count of retries which is performed to publish the event on the stream
7. errorDetails - error which is occurred while publishing the event on the stream
8. lastPublishDate - the timestamp when event published successfully on the target stream.

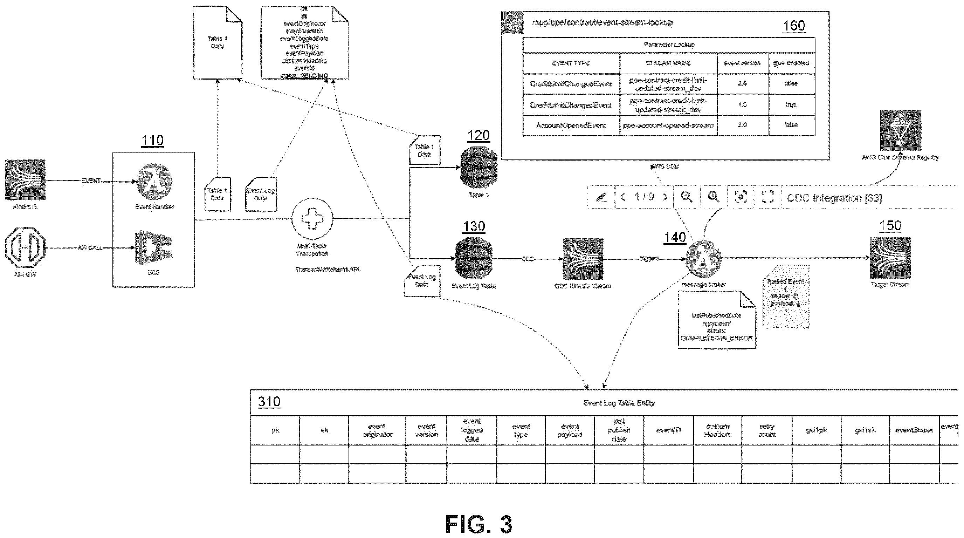

Referring to Fig. 3, it can be seen how the system of Fig. 1 and method of Fig. 2 can be implemented in an AWS Kinesis environment utilizing DynamoDB. The corresponding components of Fig. 1 in the specific Kinesis and Dynamo DB implementation are labelled in Fig. 3. In addition, the structure 310 of the event log table 130 and the configuration store 160 are depicted.

The event log table 130 has a structure 310 with at least the following column headings as follows for storing events:
i. pk (ACCOUNT#accountId)- Identifier, used to query the unique records from the event log table
ii. sk (EVENT#eventType#eventId)- Identifier, used to sort the records from the event log table
iii. gsi1pk (STATUS#PENDING) - Index Identifier used to query the records from the event log table based on event status
iv. gsilsk (DATETIME.NOW())- Index Identifier used to sort the records from the event log table based on timestamp given
v. accountId - Unique account id
vi. correlationId - Unique GUID
vii. eventLoggedDate - Date when event is logged
viii. eventOriginator - Source who has published the event
ix. customHeaders - Custom additional headers used in the event headers.
x. eventPayload - payload of the event
xi. eventType - type of the event
xii. eventVersion - Unique version of the event
xiii. eventid - Generic UUID, unique for all the events
xiv. eventStatus - status of the event
xv. eventPartitionKey - partition key of the event, used while producing into kinesis stream.

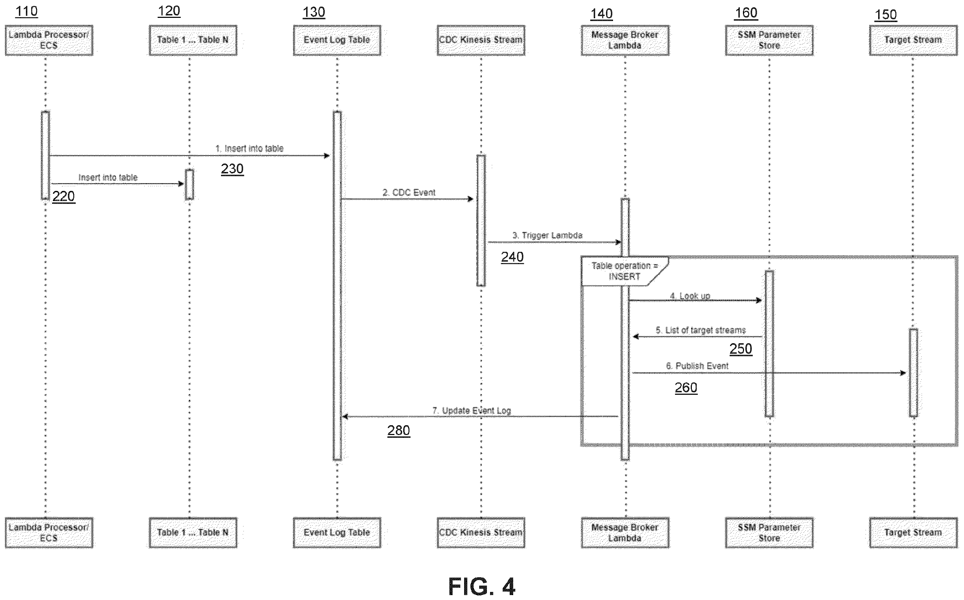

Referring to Fig. 4, it can be seen how the method of Fig. 2 is sequenced in the specific Kinesis and DynamoDB implementation of Fig. 3. The corresponding steps of the method of Fig. 2 and corresponding components of Figs. 1 and 3 are labelled in Fig. 4.

By way of example only, a sample DynamoDB data stream implementing functionality of the event management of the invention is as follows:

```
    {
    "pk": "ACCOUNT#00012D3721E08A10",
    "sk": "EVENT#CreditLimitChangedEvent#bde16a49-0a3d-4a00-9af5-
    66239d1fd4ad",
    "eventId": "bde16a49-0a3d-4a00-9af5-66239d1fd4ad",
    "eventLoggedDate": "2022-07-20T07:28:05.780+01:00",
    "eventOriginator": "PPE-Contract",
    "eventPayload":
    "{\"ppeAccountId\":\"00012D3721E08A10\",\"clmRequestType\":\"PCLD
    \",\"clmRequestStatus
    \":\"REJECTED\",\"effectiveDate\":\"2022-07-
    20T07:28:05.780+01:00\",\"offerLimit\":3000,\"strategyCode\":50,\
    "offerPeriod\":1,\"reasonCod
    e\":\"DL\",\"creditLimitChangeType\":\"CLD\",\"creditLimitChangeS
    tatus\":\"FD\"}",
    "eventPublished": true,
    "eventType": "CreditLimitChangedEvent",
    "eventversion": 1.2,
    "lastPublishDate": "2022-07-20107:28:29.243+01:00",
    "retryCount": 1,
    "status": "COMPLETED",
    "eventPartitionKey": "ACCOUNT#00012D3721E08A10"
    }
```

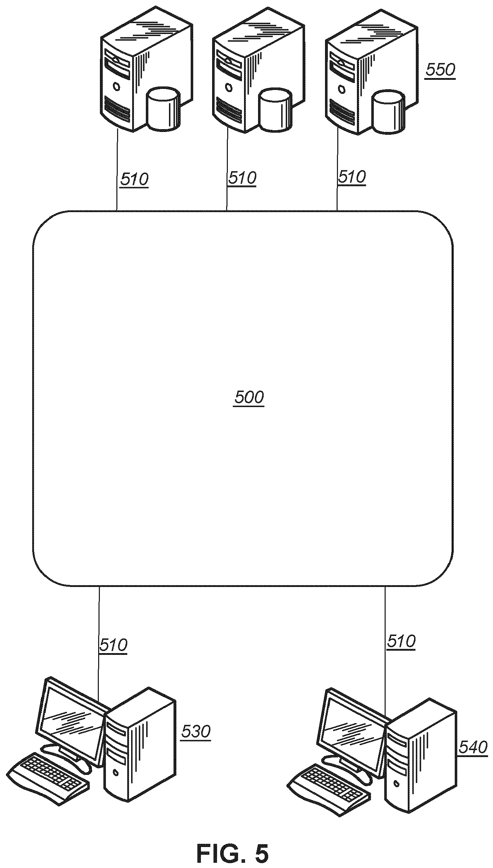

Fig. 5 is a schematic illustrating an exemplary system for implementing the methods hereinbefore described of the present invention, in particular those methods when embodied as the hereinbefore described computer programs. As shown in Fig. 5, cloud environment 500 is communicatively coupled via communication network 510 to secure provider 530, one or more users 540, and one or more external providers 550. In some embodiments, communication network 510 may be implemented or facilitated using one or more local or wide-area communications networks, such as the Internet, WiFi networks, WiMax networks, and the like. Generally, the Internet is used. Preferably, communication network 510 may utilise encryption (e.g., Secure Sockets Layer) to secure data being transferred over the communication network 510 to the cloud environment 500.

Cloud environment 500 is owned and maintained by a third party, i.e. a party that is not the secure provider 530, not one of the one or more users 540, and not one of the external providers 550. Accordingly, cloud environment 500 may be referred to as "a third-party cloud environment". Examples of third-party cloud environments include Amazon Web Services (AWS), Google Cloud Platform, and IMB Cloud. By connecting to a multitude of users 540, cloud environment 500 is able to benefit from economies of scale, thereby making processing and storing large quantities of data in cloud environment 500 efficient.

Typically, cloud environment 500 hosts computer executable code 724 (not shown) which is executed in the cloud environment 500 in response to a request from user 540, in particular the computer executable code configured to implement the methods hereinbefore described of the present invention. Execution of the computer executable code 724 causes data to be processed, and the output data produced by executing the computer executable code 724 is available for user 540 to access. In this way, the computer resources required for data processing are outsourced from the user to the cloud environment 500. This is advantageous because it means that user 540 does not have to provision and maintain their own physical computer hardware. Moreover, user 540 can send the request from anywhere, as long as they have connection to cloud environment 500 via communication network 510. Since the communication network 510 is typically the Internet, which is ubiquitous, the accessibility of cloud environment 500 to user 540 is extremely high. This is convenient as user 540 does not have to be physically present at a particular location in order to access cloud environment 500. User 540 of the cloud environment 500 may additionally or alternatively develop computer executable code 724 for execution in the cloud environment 500. User 540 can access computer executable code 724 in cloud environment 500 through a web browser or any other appropriate client application residing on a client computer.

When executed, computer executable code 724 may process data or use data. This data is made available to the cloud environment 500 by including particular services in the computer executable code 724 such as access to REST (Representational State Transfer) APIs (Application Programming Interface) or similar communication protocols. REST APIs work by making HTTP requests to GET, PUT, POST and DELETE data. Thus, when the computer executable code 724 makes a request for data, it may do so by making a HTTP GET request to the data source. Such services (and therefore data) may be provided either internally within the cloud environment 500, or externally by one or more external providers 550.

Secure provider 530 is a special type of user 540 which is not only able to interact with cloud environment 500 in the same way as user 540 (i.e. send requests to cause computer executable code 724 to be executed in the cloud environment 500, and develop computer executable code 724 to be executed in the cloud environment 500), but is also able to provide services (and therefore data) to the cloud environment 500. Accordingly, the secure provider 530 may be thought of as a hybrid user/external provider. Secure provider 530 has additional security provisions over user 540 and external providers 550 because data provided by the secure provider 530 may be protected data and/or the computer executable code developed by the secure provider 530 may be protected.

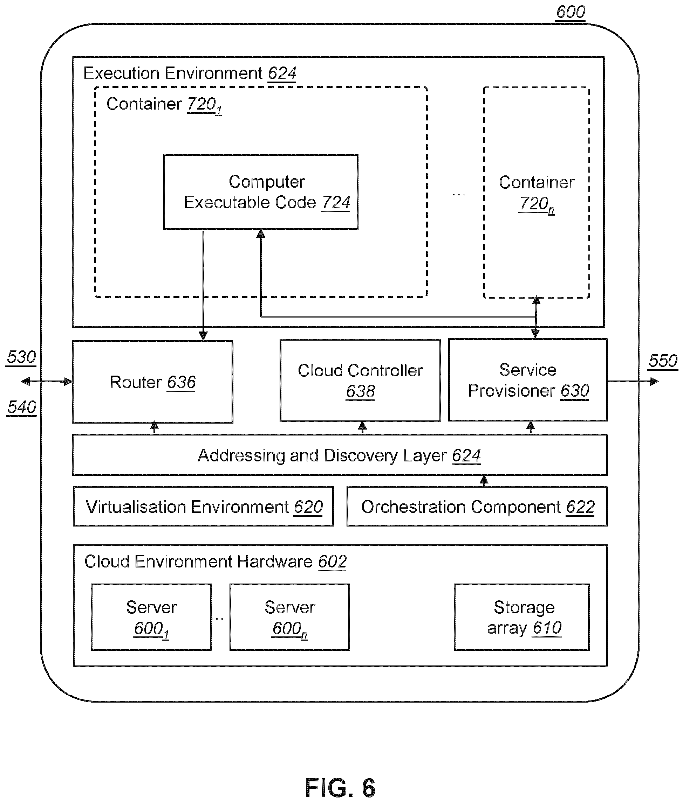

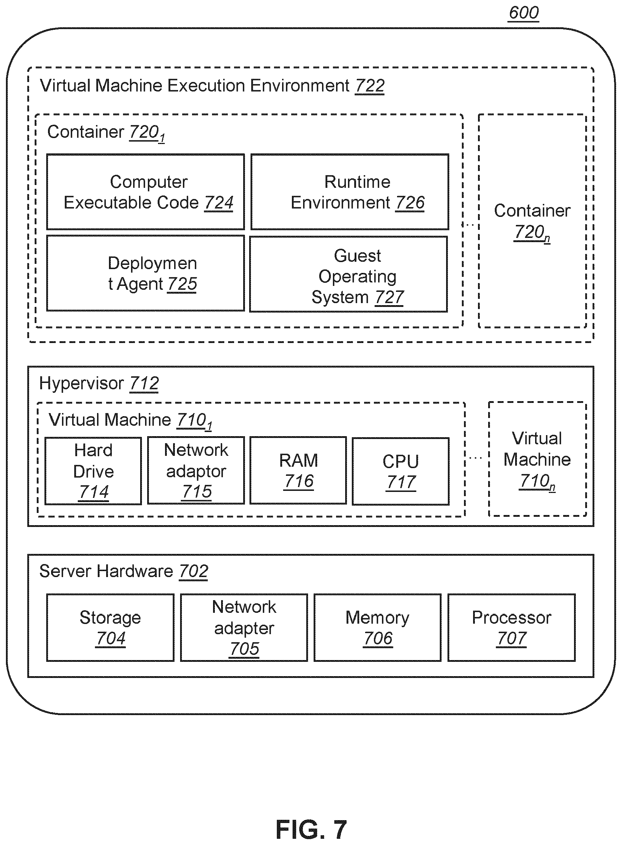

Fig. 6 shows an exemplary third-party cloud environment 500 for implementing a method of the invention. As seen in Fig. 6, cloud environment 500 comprises cloud environment hardware 602 that can be invoked to instantiate data processing, data storage, or other computer resources using cloud computing hardware 602 for a limited or defined duration. Cloud environment hardware 602 may comprise one or more servers 600₁ to 600ₙ, and a storage array network 610, as well as any other suitable hardware. Cloud environment hardware 602 may be configured to provide a virtualisation environment 620 that supports the execution of a plurality of virtual machines 710 (not shown) across the one or more servers 600₁ to 600ₙ. As described in relation to Fig. 7, the plurality of virtual machines 710 provide various services and functions for cloud environment 500.

Virtualisation environment 620 of Fig. 6 may include orchestration component 622 that monitors the cloud environment hardware 602 resource consumption levels and the requirements of cloud environment 500 (e.g., by monitoring communications routed through addressing and discovery layer 624), and provides additional cloud environment hardware 602 to cloud environment 500 as needed. For example, if cloud environment 500 requires additional virtual machines 710 to host new computer executable code 724, orchestration component 622 can initiate and manage the instantiation of the virtual machines 710 on the one or more servers 600₁ to 600ₙ to support such needs. In one example implementation, virtualisation environment 620 may be implemented by running Amazon Elastic Compute Cloud (Amazon EC2) on servers 600₁ to 600ₙ. It should be recognised that any other virtualization technologies may alternatively be utilised.

Cloud environment 500 supports an execution environment 632 that comprises a plurality of virtual machines 710 (or containers 720, as is discussed in relation to Fig. 7) instantiated to host deployed computer executable code 724. For example, deployment by user 540 or by secure provider 530 of computer executable code 724 to the cloud environment 500 results in the hosting of computer executable code 724 in virtual machine 710₁ and/or container 720₁, of execution environment 632.

Computer executable code 724 can access internal services (such as, for example, one or more of services 101₁ to 101_{N}) provided by cloud environment 500 as well as external services from one or more external providers 550 and/or from secure provider 530 (such as, for example, one or more of services 101₁ to 101_{N}). Services may include, for example, accessing a REST API, a custom database, a relational database service (e.g., MySQL, etc.), monitoring service, background task scheduler, logging service, messaging service, memory object caching service and the like. A service provisioner 630 serves as a communications intermediary between these available services (e.g., internal services and external services) and other components of cloud environment 500 (e.g., cloud controller 638, router 636, containers 720) and assists with provisioning available services to computer executable code 724 during the deployment process.

Service provisioner 630 may maintain a stub for each service available in cloud computing environment 500. Each stub itself maintains service provisioning data for its corresponding service, such as a description of the service type, service characteristics, login credentials for the service (e.g., root username, password, etc.), a network address and port number of the service, and the like. Each stub component is configured to communicate with its corresponding service using an API or similar communications protocol.

Referring back to Fig. 6, addressing and discovery layer 624 provides a common interface through which components of cloud computing environment 500, such as service provisioner 630, cloud controller 638, router 636 and containers 620 in the execution environment 632 can communicate. For example, service provisioner 730 may communicate through addressing and discovery layer 624 to broadcast the availability of services and to propagate service provisioning data for such services during deployment of computer executable code 724 in cloud environment 500.

Cloud controller 638 is configured to orchestrate the deployment process for computer executable code 624 that is submitted to cloud environment 500 by the user 540 or the secure provider 530. In particular, cloud controller 638 receives computer executable code 724 submitted to cloud computing environment 500 from user 540 or secure provider 530 and, as further detailed below, interacts with other components of cloud environment 500 to call services required by the computer executable code 724 and package the computer executable code 724 for transmission to available containers 720. An example cloud controller 638 service is Amazon Elastic Container service (ECS).

Typically, once cloud controller 638 successfully orchestrates the computer executable code 724 in container 720, a secure provider 530 and/or a user 540 can access the computer executable code through a web browser or any other appropriate client application residing on a computer of user 540 or service provider 530. Router 636 receives the web browser's access request (e.g., a uniform resource locator or URL) and routes the request to container 710 which hosts the computer executable code 724.

It should be recognized that the embodiment of Fig. 6 is merely exemplary and that alternative cloud environment architectures may be implemented consistent with the teachings herein. For example, while Fig. 6 implements cloud computing environment 500 on cloud environment hardware 602, it should be recognized that cloud environment 500 may be implemented by a third-party in an alternative manner and on top of any type of hardware.

Fig. 7 is a schematic of an exemplary server 600 for implementing a method of the invention. In particular, Fig. 7 depicts server 600 comprising server hardware 702 and virtual machine execution environment 732 having containers 720 with computer executable code 724. The computer executable code 724 is configured for implementing the methods hereinbefore described of the present invention. The server hardware 702 may include local storage 704, such as a hard drive, network adapter 705, system memory 706, processor 707 and other I/O devices such as, for example, a mouse and keyboard (not shown).

A virtualisation software layer, also referred to as hypervisor 712, is installed on top of server hardware 702. Hypervisor 712 supports virtual machine execution environment 732 within which containers 720 may be concurrently instantiated and executed. In particular, each container 720 provides computer executable code 724, deployment agent 725, runtime environment 726 and guest operating system 727 packaged into a single object. This enables container 720 to execute computer executable code 724 in a manner which is isolated from the physical hardware (e.g. server hardware 702, cloud environment hardware 602), allowing for consistent deployment regardless of the underlying physical hardware.

As shown in Fig. 7, virtual machine execution environment 732 of server 600 supports a plurality of containers 720₁ to 720ₙ. Docker is an example of a virtual machine execution environment 732 which supports containers 720. For each container 720₁ to 720ₙ, hypervisor 712 manages a corresponding virtual machine 710₁ to 710ₙ that includes emulated hardware such as virtual hard drive 714, virtual network adaptor 715, virtual RAM 716, and virtual central processing unit (CPU) 717. For example, virtual machine 710 may function as an equivalent of a standard x86 hardware architecture such that any x86 supported operating system may be installed as a guest operating system 727 to execute computer executable code 724 for container 720. Container 720 may be provided by virtualisation environment 620, as previously discussed for Fig. 6.

Hypervisor 712 is responsible for transforming I/O requests from guest operating system 727 to virtual machines 710, into corresponding requests to server hardware 702. In Fig. 7, guest operating system 727 of container 720 supports the execution of deployment agent 725, which is a process or daemon that communicates (e.g., via addressing and discovery layer 624) with cloud controller 638 to receive and unpack computer executable code 724 and its deployment package. Deployment agent 725 also communicates with router 636 to provide network routing information for computer executable code 724 that have been deployed in container 720. Guest operating system 727 further supports the execution of runtime environment 726 within which computer executable code 724 is executed.

It should be recognized that the various layers and modules described with reference to Fig. 7 are merely exemplary, and that other layers and modules may be used with the same functionality without departing from the scope of the invention. It should further be recognized that other virtualised computer architectures may be used, such as hosted virtual machines.

It will be appreciated that embodiments described herein may be implemented using a variety of different computing systems. In particular, although the figures and the discussion thereof provide an event management and/or publishing system and method for operating thereof, these are presented merely to provide a useful reference in discussion various aspects of the invention. It will be appreciated that the boundaries between logic blocks in a block diagram are merely illustrative and that alternative embodiments may merge logic blocks or elements, or may impose an alternative decomposition of functionality upon various logic blocks or elements.

It will be appreciated the above-mentioned functionalities may be implemented as one or more corresponding software modules or components. Method steps implemented in flow diagrams herein, or as described above, may each be implemented by corresponding respective modules; multiple method steps implemented in flow diagrams contained herein, or as described above, may together be implemented by a single module.

It is to be understood that some features of the exemplary embodiments that are described as optional may or may not be part of the claimed invention and features of the disclosed embodiments may be combined. Unless specifically set forth herein, the terms "a", "an", and "the" are not limited to one element but instead should be read as meaning "at least one".

It is to be understood that at least some of the figures and descriptions of the invention have been simplified to focus on elements that are relevant for a clear understanding of the invention, while eliminating, for purpose of clarity, other elements that those of ordinary skill in the art will appreciate may also comprise a portion of the invention. However, because such elements are well known in the art, and because they do not necessarily facilitate a better understanding of the invention, a description of such elements is not provided herein. Furthermore, to the extent that the method does not rely on the particular order of steps set forth herein, the particular order of the steps should not be construed as limitation on the claims.

It will be appreciated that, insofar as embodiments of the invention are implemented by software (or a computer program), then a computer-readable storage medium carrying the computer program may form aspects of the invention. The computer program may have one or more program instructions, or program code, which, when executed by a processor, carries out an embodiment of the invention. The term "program" or "software" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution for execution on a computer system. The storage medium may be magnetic disc, an optical disc, or a memory (e.g. a ROM, a RAM, EEPROM, EPROM, flash memory or a portable/removable memory device), etc. The transmission medium may be communications signal, a data broadcast, a communications link between two or more computers, etc.

Various numbered embodiments of the present disclosure are set out below. These provide a disclosure of various computer-implemented methods for encrypting data, searching ciphertext, and decrypting ciphertext, and data processing apparatuses, computer programs, and computer readable storage media for achieving the same.

### Numbered Embodiments

1. A computer-implemented method for publishing an event to at least one stream, the method comprising:
   receiving an operation to be performed on a domain table;
   performing the operation on the domain table;
   populating an event log table with event data, the event data being based on the operation performed on the domain table;
   publishing, in response to the populating of the event log table, an event to a target stream, the event being based on the event data.
2. The method of embodiment 1, wherein performing the operation on the domain table and populating the event log table with the event data occur simultaneously, optionally wherein the two steps occur with atomicity.
3. The method of embodiment 1 or embodiment 2, wherein the event data comprises a status identifier, and wherein, at the point of populating the event log table, the status identifier identifies that the event is pending publication.
4. The method of any preceding embodiment, further comprising:
   receiving confirmation that the event has been published to the at least one stream.
5. The method of embodiment 4, further comprising:
   updating the status identifier in the event log table to identify that the event has completed publication.
6. The method of embodiment 1, wherein the event data further comprises a target stream identifier, and wherein publishing the event to the target stream comprises:
   determining, based on the target stream identifier, the target stream to which to publish the event.
7. The method of embodiment 6, wherein the target stream identifier comprises an event type identifier, and wherein determining the target stream to which to publish the event comprises:
   determining an event type of the event from the event type identifier; and
   determining a target stream associated with the event type, optionally retrieving the target stream from a lookup table.
8. The method of embodiment 7, wherein if the event data comprises no event type identifier or if no target stream can be determined to be associated with the event type, the method is aborted.
9. The method of any preceding embodiment, wherein the event data further comprises at least one of:
   a timestamp corresponding to when the event was logged;
   a timestamp corresponding to when the event was published;
   an originator identifier, identifying the source of the event;
   a payload identifier, identifying the event payload;
   a version identifier, identifying the event version; and
   a retry identifier, identifying a number of attempts to publish the event; and
   a publication identifier, identifying whether or not the event has been published to the target stream.
10. The method of any preceding embodiment, wherein the event is published to at least two target streams, and wherein the status identifier in the event log table is updated to identify that the event has completed publication when confirmation of publication to all streams is received.
11. The method of any preceding embodiment, further comprising:
   identifying that publishing the event to the target stream has failed; and
   retrying the publishing step at least once, optionally three times, wherein retrying steps are halted if the event successfully publishes.
12. The method of embodiment 11, wherein a first retry of the publishing step takes place a first time interval after the failure to publish first occurred, and a second retry of the publishing step takes place a second time interval after failure of the first retry, wherein the second time interval is larger than the first time interval.
13. The method of any preceding embodiment, wherein the domain table and event log table are stored in a first domain, and wherein the target stream publishes the event to a second domain, distinct from the first domain.
14. The method of any preceding embodiment, wherein the database is a NoSQL Database.
15. The method of any preceding embodiment, further comprising:
   receiving a second operation to be performed on the domain table;
   repeating the steps of any one of embodiments 1 to 14 for the second operation.
16. The method of embodiment 15, further comprising:
   determining that publishing the event based on one or both of the first and second operations failed to be performed successfully; and
   at a configurable interval, retrying each publishing that is determined to have failed.
17. A data processing apparatus comprising a processor configured to carry out the method of any one of embodiments 1 to 16.
18. A computer program comprising instructions which, when executed on a computer, cause the computer to carry out the method of any one of embodiments 1 to 16.
19. A computer readable storage medium having stored thereon the computer program of embodiment 18.

## Claims

1. A computer-implemented method for publishing an event to at least one data stream, the method comprising:
receiving an operation to be performed on a domain table;
performing the operation on the domain table;
populating an event log table with event data, the event data being based on the operation performed on the domain table;
publishing, in response to the populating of the event log table, an event to a target stream, the event being based on the event data.

2. The method of claim 1, wherein performing the operation on the domain table and populating the event log table with the event data occur simultaneously, optionally wherein the two steps occur with atomicity.

3. The method of claim 1 or claim 2, wherein the event data comprises a status identifier, and wherein, at the point of populating the event log table, the status identifier identifies that the event is pending publication.

4. The method of any preceding claim, further comprising:
receiving confirmation that the event has been published to the at least one stream; and
optionally, updating the status identifier in the event log table to identify that the event has completed publication.

5. The method of claim 1, wherein the event data further comprises a target stream identifier, and wherein publishing the event to the target stream comprises:
determining, based on the target stream identifier, the target stream to which to publish the event,
optionally wherein the target stream identifier comprises an event type identifier, and wherein determining the target stream to which to publish the event comprises:
determining an event type of the event from the event type identifier; and
determining a target stream associated with the event type, optionally retrieving the target stream from a lookup table.

6. The method of claim 5, wherein if the event data comprises no event type identifier or if no target stream can be determined to be associated with the event type, the method is aborted.

7. The method of any preceding claim, wherein the event data further comprises at least one of:
a timestamp corresponding to when the event was logged;
a timestamp corresponding to when the event was published;
an originator identifier, identifying the source of the event;
a payload identifier, identifying the event payload;
a version identifier, identifying the event version; and
a retry identifier, identifying a number of attempts to publish the event; and
a publication identifier, identifying whether or not the event has been published to the target stream.

8. The method of any preceding claim, wherein the event is published to at least two target streams, and wherein the status identifier in the event log table is updated to identify that the event has completed publication when confirmation of publication to all streams is received.

9. The method of any preceding claim, further comprising:
identifying that publishing the event to the target stream has failed; and
retrying the publishing step at least once, optionally three times, wherein retrying steps are halted if the event successfully publishes, optionally wherein a first retry of the publishing step takes place a first time interval after the failure to publish first occurred, and a second retry of the publishing step takes place a second time interval after failure of the first retry, wherein the second time interval is larger than the first time interval.

10. The method of any preceding claim, wherein the domain table and event log table are stored in a first domain, and wherein the target stream publishes the event to a second domain, distinct from the first domain and/or wherein the database is a NoSQL Database.

11. The method of any preceding claim, further comprising:
receiving a second operation to be performed on the domain table;
repeating the steps of any one of claims 1 to 10 for the second operation.

12. The method of claim 11, further comprising:
determining that publishing the event based on one or both of the first and second operations failed to be performed successfully; and
at a configurable interval, retrying each publishing that is determined to have failed.

13. A data processing apparatus comprising a processor configured to carry out the method of any one of claims 1 to 12.

14. A computer program comprising instructions which, when executed on a computer, cause the computer to carry out the method of any one of claims 1 to 12.

15. A computer readable storage medium having stored thereon the computer program of claim 14.
